# EUROPÄISCHE PATENTSCHRIFT

(11) **EP 0 776 285 B1**
(45) Veröffentlichungstag und Bekanntmachung des Hinweises auf die Patenterteilung: **03.06.1998**
(21) Anmeldenummer: 95931197.8
(22) Anmeldetag: 24.08.1995
(51) Int. Cl.: B60S 9/08, F16H 25/20

(54) **MEHRSTUFIGER SPINDELTRIEB ZUR UMSETZUNG EINER DREHBEWEGUNG IN EINE LINEARBEWEGUNG**
MULTISTAGE SPINDLE DRIVE FOR CONVERTING ROTARY MOTION INTO LINEAR MOTION
COMMANDE D'ARBRE A PLUSIEURS ETAGES DESTINEE A CONVERTIR UN MOUVEMENT ROTATIF EN MOUVEMENT LINEAIRE

(30) Priorität: 25.08.1994 DE 9413740 U
(43) Veröffentlichungstag der Anmeldung: 04.06.1997
(73) Patentinhaber: AL-KO KOBER AG, D-89359 Kötz (DE)
(72) Erfinder: KOBER, Kurt, D-89359 Kötz (DE); RAMPP, Armin, D-86513 Ursberg (DE)
(74) Vertreter: Ernicke, Hans-Dieter, Dipl.-Ing.
(86) Internationale Anmeldenummer: EP9503353
(87) Internationale Veröffentlichungsnummer: WO9605991

(56) Entgegenhaltungen:
- EP-A- 0 356 753
- EP-A- 0 552 129
- GB-A- 881 357
- US-A- 3 880 403

## Beschreibung

Die Erfindung bezieht sich auf einen mehrstufigen Spindeltrieb zur Umsetzung einer Drehbewegung in eine Linearbewegung mit den Merkmalen im Oberbegriff des Hauptanspruchs.

Ein solcher Spindeltrieb ist aus der EP-A-0 552 129 bekannt. Mit dieser Anordnung wird angestrebt, die Höhenverstellung des Stützrades, wenn dieses unbelastet ist, rascher auszuführen als im belasteten Zustand. Der Spindeltrieb besteht aus zwei ineinander greifenden und miteinander in Schraubverbindung stehenden Gewindespindeln, die unterschiedliche Steigungen und Durchmesser aufweisen. Die kleinere Innenspindel mit der niedrigen Steigung wird mittels einer Kurbel gedreht und schraubt sich in die größere Außen- oder Hohlspindel. Auf der Hohlspindel mit der größeren Steigung sitzt eine Mutter, an der über ein Rohr ein Stützrad befestigt ist. Durch die unterschiedlichen Steigungen hat der Spindeltrieb einen Schnellgang und einen Lastgang, die lastabhängig durch unterschiedliche Reibkräfte in den Gewinden umgeschaltet werden. Beim Schnellgang und lastfreiem Spindeltrieb soll die Innenspindel durch die höhere Reibung die Hohlspindel mitnehmen und gegenüber der Mutter drehen. Sobald eine Stützlast auftritt und der besser übersetzte langsame Lastgang benötigt wird, soll lastbedingt die Reibung zwischen Hohlspindel und Mutter größer als zwischen Innen- und Hohlspindel werden, so daß sich beim Lastgang die Innenspindel gegenüber der stehenden Hohlspindel dreht. Die für den Schnellgang erforderlichen Reibunterschiede in den Spindeln sollen allein durch die Steigungs- und Durchmesserunterschiede erreicht werden, was sich in der Praxis nicht immer zuverlässig erreichen und auf Dauer einhalten läßt. Problematisch ist ferner, daß das Gewinde zwischen Hohlspindel und Mutter bewußt keine Selbsthemmung hat. Dies hat einerseits zur Folge, daß der Spindeltrieb unter Last in unerwünschter Weise selbsttätig einfahren kann, weshalb die Kurbel im Stand zwingend gesichert werden muß. Der Bediener kann dies jedoch vergessen. Andererseits funktioniert der Spindeltrieb nur dann, wenn die Stützlast außermittig von der Spindelachse angreift und ein die Reibkraft verstärkendes Kippmoment auf die Paarung Hohlspindel/Mutter ausübt.

Aus der DE-A 38 29 131 ist ein anderer Spindeltrieb mit Schnell- und Lastgang zur Betätigung eines Stützrades für Fahrzeuganhänger bekannt. Er weist ebenfalls eine Innen- und eine Außenspindel mit unterschiedlichen Steigungen und Durchmessern auf, die konzentrisch ineinander geführt aber nicht miteinander verschraubt sind. Das Gehäuse dieses Stützrades besteht aus zwei Teilen, die über ein Gewinde miteinander verbunden sind und die Außen- oder Hohlspindel bilden. Das untere Teil ist ortsfest am Fahrzeuganhänger angeflanscht. Das obere Teil ist mit Hilfe dieses Gewindes höhenverstellbar und führt die Innenspindel, welche über eine Mutter und ein Rohrstück mit dem Stützrad verbunden ist. Am Kurbelschaft befindet sich eine vorgespannte Reibkupplung, mittels der das obere Teil der Außenspindel bei der Kurbeldrehung mitgenommen werden kann. Die Mitnahme erfolgt im Schnellgang, wobei sich beide Spindeln drehen und ihre Hübe sich addieren. Im Lastgang ist das Reibmoment in den Teilen der Außenspindel größer als in der Reibkupplung, so daß sich nur die Innenspindel dreht.

Der Erfindung liegt die Aufgabe zugrunde, einen mehrstufigen Spindeltrieb zu schaffen, der bei geringem Raum- und Kostenaufwand eine leichte Handhabung ermöglicht und dauerhaft funktionsfähig ist.

Die Erfindung löst diese Aufgabe mit den Merkmalen im Hauptanspruch.
Das erfindungsgemäß zwischen den Gewindespindeln angeordnete Kupplungsglied ermöglicht es, die für den Schnellgang erforderlichen Reibungsunterschiede in den Bewegungsgewinden besser und definiert einzustellen, als dies allein mit den Steigungs- und Durchmesserunterschieden in den Gewindespindeln möglich ist. Das Kupplungsglied erhöht die Reibung zwischen den Gewindespindeln soweit, daß sie im unbelasteten Zustand mit Sicherheit stets größer als zwischen der Gewindespindel und der abtriebsseitigen Mutter ist. Mit dem Kupplungsglied können Reibungsänderungen kompensiert werden, die im Betrieb auftreten und auf Verschleiß, Material, Toleranzen, Verschmutzung und sonstigen Einflüssen beruhen. Zudem besteht für den Konstrukteur eine größere Variationsfreiheit bei der Wahl der Steigungen, Durchmesser und Werkstoffe der Gewindespindeln. Durch die Erfindung wird sichergestellt, daß der Schnellgang und der Gangwechsel bei Belastungsänderung in allen Betriebszuständen und auf Dauer funktioniert.

Für die Ausgestaltung des Kupplungsglieds gibt es unterschiedliche Möglichkeiten. Vorzugsweise ist es federbelastet und in seiner Wirkung einstellbar. In der Ausführung als endseitig angeordnete Gewindebuchse kann es außerdem als Mutteranschlag dienen.

Für eine bessere Sicherung des Spindeltriebs gegen ungewolltes Einfahren unter Last sieht die Erfindung eine geeignete Einrichtung im Bereich der abtriebsseitigen Gewindespindel und der Außenverschraubung vor. Dadurch wird die fehlende Selbsthemmung der Außenverschraubung auf einfache und betriebssichere Weise sowie automatisch kompensiert. Der Bediener muß nicht mehr an die Stützsicherung denken und braucht keine extra Sicherung an der Kurbel mehr zu betätigen.

Für die Spindeltriebsicherung gibt es verschiedene Möglichkeiten. Die bevorzugte Ausführung mit dem reibungserhöhenden Flankenprofil hat den Vorteil, daß sie gezielt wirken kann. Mit einer einseitigen Flankenabflachung wird der Stützlast eine erhöhte Gewindereibung und quasi eine Selbsthemmung in der Außenverschraubung entgegegengesetzt, die nur im Belastungsfall wirksam ist und das Aus- und Einfahren des Spindeltriebs im Schnellgang nicht behindert. Andererseits werden der Gangwechsel und die Spindelumschaltung verbessert. Der erfindungsgemäße Spindeltrieb funktioniert auch bei achsnahen Stützkräften zuverlässig.

Der erfindungsgemäße Spindeltrieb kann zwei- oder mehr Stufen haben. Er läßt sich für beliebige Zwecke einsetzen. Ein bevorzugter Einsatzbereich sind verstellbare Stützen für Fahrzeuge oder Fahrzeuganhänger.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: einen Längsschnitt durch einen Spindeltrieb in Form einer Fahrzeugstütze,
- Figur 2:: eine vergrößerte und abgebrochene Darstellung des Spindeltriebs von Fig. 1
- Figur 3:: einen Querschnitt durch den Spindeltrieb längs der Linie III-III in Figur 2,
- Figur 4:: den Spindeltrieb in Ein- und Ausfahrstellung und
- Figur 5:: einen abgebrochenen Längsschnitt durch das Flankenprofil der äußeren Gewindespindel.

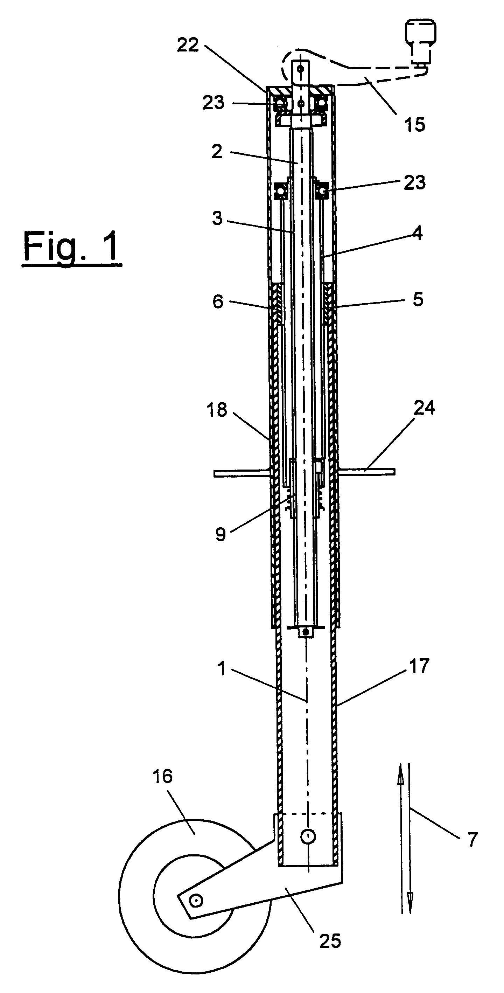

Figur 1 zeigt einen Längsschnitt durch einen Spindeltrieb (22), der hier als höhenverstellbare Stützanordnung für ein Fahrzeug oder einen Fahrzeuganhänger ausgebildet ist. Der Spindeltrieb (22) kann ansonsten auch für beliebige andere Zwecke eingesetzt werden.

In der gezeigten Ausführungsform ist der Spindeltrieb (22) zweistufig. Er besteht aus zwei ineinandergreifende Gewindespindeln (2,4) und einer Mutter (6). Die innere antriebsseitige Gewindespindel (2) ist am oberen Ende mit einem geeigneten Antriebselement (15) versehen, hier vorzugsweise in Form einer Kurbel. Die auf der äußeren Gewindespindel (4) laufende Mutter (6) ist mit einem Rohr (17) verbunden, das am unteren Ende ein Abtriebselement (16) trägt, das hier vorzugsweise als drehbares Stützrad ausgebildet ist und über einen Ausleger (25) mit dem Rohr (17) verbunden ist.

Der Spindeltrieb (22) steckt in einem Gehäuse, das von einem beispielsweise zylindrischen Rohr (18) gebildet wird. An dem Rohr (18) sind Flanschplatten oder dergleichen als Beschlagteile (24) zur Befestigung des Spindeltriebs (22) an einem Fahrzeug oder einem Fahrzeuganhänger angebracht. Aus dem oberen Ende des Rohrs (18) ragt der Schaft der inneren Gewindespindel (2) mit der Kurbel (15). Der Spindelschaft ist über ein geeignetes Drehlager (23) mit einer darunter angeordneten topfförmigen Stützscheibe am Deckel des Rohres (18) befestigt und zentrisch im Rohrinneren gehalten und geführt.

Das mit der Mutter (6) verbundene Rohr (17) ist im äußeren Rohr (18) teleskopisch geführt und hat vorzugsweise ebenfalls eine zylindrische Form. Beide Rohre (17, 18) können alternativ auch gegeneinander drehgesichert sein, was z. B. durch eine ovale oder mehreckige Form möglich ist.

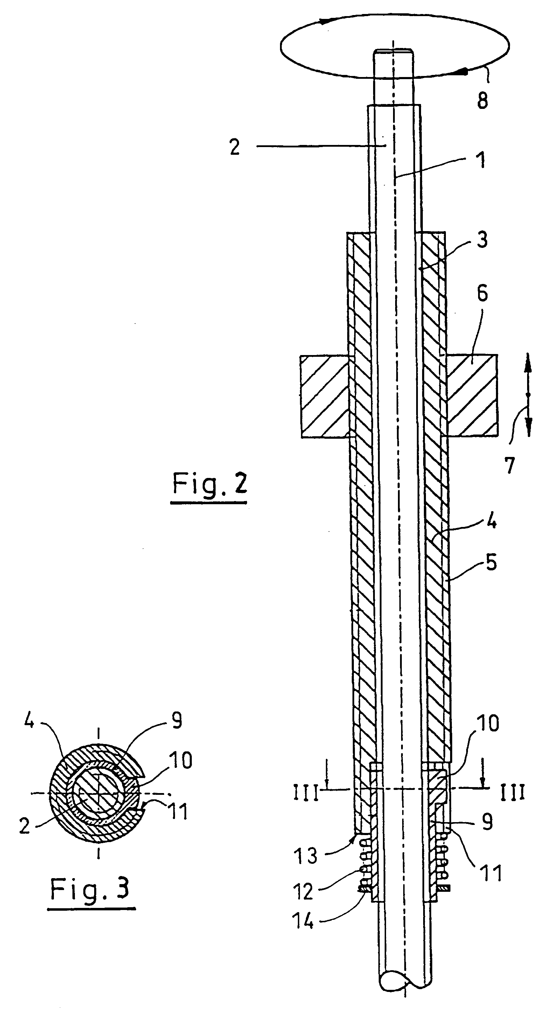

Wie Figur 2 und 3 im einzelnen zeigen, sind die innere Gewindespindel (2) und die äußere hohle Gewindespindel (4) längs einer gemeinsamen Achse (1) über eine sogenannte Innenverschraubung (3) miteinander verbunden. Die innere Gewindespindel (2) besitzt ein Außengewinde, das sich vorzugsweise fast über die gesamte Spindellänge erstreckt. Die äußere Gewindespindel (4) hat ein entsprechendes Innengewinde, das sich vorzugsweise nur über einen Teil der Spindellänge erstreckt.

Die äußere Gewindespindel (4) besitzt eine Außenverschraubung (5), auf der die Mutter (6) bei Verdrehen der äußeren Gewindespindel (5) linear entsprechend dem Pfeil (7) beweglich ist. Es wird eine Drehbewegung gemäß Pfeil (8), die z.B. über die Kurbel (15) auf die innenliegende Gewindespindel (2) eingebracht und in eine Linearbewegung (7) der Mutter (6) umgesetzt.

Die Mutter (6) ist gegen Verdrehung gesichert, was z.B. durch eine drehfeste Führung des mit der Mutter (6) verbundenen Innenrohrs (17) im Außenrohr (18) geschehen kann. Alternativ kann die Drehsicherung auch durch erhöhte Reibung der Rohrwandungen oder durch Festhalten des Stützrades (16) erfolgen.

Zwischen den Gewindespindeln (2,4) ist zudem ein Kupplungsglied (9) angeordnet, das die Reibung an der Innenverschraubung (3) erhöht. Das Kupplungsglied (9) ist in der bevorzugten Ausführungsform als Gewindebuchse (9) ausgebildet, die sich im Schraubeingriff auf dem Außengewinde der inneren Gewindespindel (2) befindet und in einer vergrößerten gewindefreien Öffnung am unteren Ende der äußeren Gewindespindel (4) längsbeweglich und drehfest geführt ist. Die Gewindebuchse (9) greift zur Drehsicherung mit einer nach außen ragenden Nase (10) in eine schlitzartige Aussparung (11) an der außenliegenden Gewindespindel (4). Auf dem Umfang der über das Stirnende (13) der äußeren Gewindespindel (4) ragenden Gewindebuchse (9) befindet sich eine Druckfeder (12), die zwischen dem Stirnende (13) der außenliegenden Gewindespindel (4) und einem Anschlag (14), der sich auf der Gewindebuchse (9) befindet, eingespannt ist.

Durch die Druckfeder (12) wird die Gewindebuchse (9) mitsamt der im Schraubeingriff stehenden inneren Gewindespindel (2) von der äußeren Gewindespindel (4) weggedrückt. Dies führt zu einer Verspannung an der Innenverschraubung (3) und zur Aufnahme des zwischen den beiden Gewindespindeln (2,4) bestehende Spiels. Die Reibungskraft, die zwischen den Gewindeflanken der inneren Gewindespindel (2) und der Gewindebuchse (9) sowie der äußeren Gewindespindel (4) herrscht, wird erhöht.

Die innere Gewindespindel (2) und die Mutter (6) bestehen aus Metall, vorzugsweise aus Stahl. Die äußere Gewindespindel (4) besteht hingegen aus einem reibungsarmen zähen Kunststoff , z.B. POM.

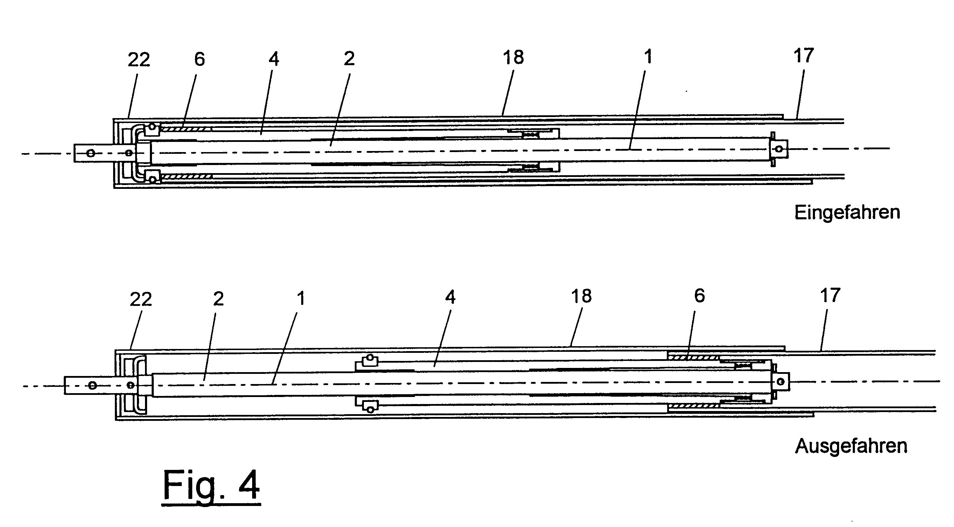

Die teleskopische Längsbewegung der äußeren Gewindespindel (4) gegenüber der inneren Gewindespindel (2) wird nach oben durch die topfförmige Scheibe am Spindelschaft und ein am Kopf der äußeren Gewindespindel (4) befindliches Dreh- und Axiallager (23) begrenzt. Die innere Gewindespindel (2) kann sich so auch bei Anlage noch drehen. Nach unten wird die Längsbewegung durch einen Anschlag am Ende der inneren Gewindespindel (2) begrenzt. Die Längsbewegung der Mutter (6) auf der äußeren Gewindespindel (4) findet nach oben durch das vorerwähnte Lager (23) und nach unten durch das Kupplungsglied (9) oder einen anderen Anschlag ihre Begrenzung. Figur 4 zeigt den Spindeltrieb (22) in Ein- und Ausfahrstellung.

Die Innen- und Außenverschraubungen (3,5) sind als Bewegungsgewinde ausgeführt. Beispielsweise handelt es sich um Trapezgewinde, die zweigängig sind und eine reduzierte Profiltiefe aufweisen. Die Trapezgewinde können ein vergrößertes Spiel haben.

Die Innenverschraubung (3) hat eine kleinere Steigung als die Außenverschraubung (5). Außerdem ist der Durchmesser der Innenverschraubung (3) bzw. der inneren Gewindespindel (2) kleiner als der Durchmesser der Außenverschraubung (5) bzw. der äußeren Gewindespindel (4). Bei der Außenverschraubung (4) ist der Steigungswinkel größer als der sogenannte Reibwinkel, so daß die Außenverschraubung (4) bei einer normalen Flankengeometrie des Trapezgewindes keine Selbsthemmung besitzt. Die Außenverschraubung hat im gezeigten Ausführungsbeispiel eine Größe von Tr 30x16 P8 und die Innenverschraubung (3) eine Größe von Tr 16x4.

Der Spindeltrieb (22) hat aufgrund der Steigungsunterschiede einen Schnellgang und einen Langsamgang. Die Gänge werden reibungs- und belastungsabhängig geschaltet. Im Schnellgang dreht sich die Außenverschraubung mit der größeren Steigung, wodurch sich die Mutter (6) mit dem Innenrohr (17) und dem Abtriebselement (16) mit erhöhter Geschwindigkeit je nach Drehrichtung auf und ab bewegt. Im Langsamgang dreht sich die Innenverschraubung (3), die durch die geringere Steigung zwar einen kleineren Hub ausführt, dafür aber eine bessere Kraftübersetzung besitzt. Mit dem Schnellgang wird das Abtriebselement (16) im unbelasteten Zustand schnell auf und ab bewegt. Der Langsamgang wird bei Auftreten einer Stützlast eingeschaltet und erlaubt ein ergonomisches Betätigen des Spindeltriebs (22). Die auszubringende Antriebskraft bzw. Handkraft ist für beide Gänge vorzugsweise im wesentlichen gleich groß.

Die Umschaltung der Gänge erfolgt reib- und lastabhängig. Im unbelasteten Zustand des Spindeltriebs (22) ist durch die Steigungs- und Durchmesserunterschiede sowie das Kupplungsglied (9) die Reibung in der Innenverschraubung (3) größer als in der Außenverschraubung (4). Dadurch nimmt die innere Gewindespindel (2) bei ihrer Drehung die äußere Gewindespindel (4) mit und dreht diese gegenüber der Mutter (6). Die Mutter (6) bewegt sich dadurch mit dem Innenrohr (17) und dem Abtriebselement (16) im Schnellgang linear (7) auf und ab.

Sobald eine in Spindelrichtung wirkende Stützlast auftritt, indem z. B. das Abtriebselement (16) auf den Boden trifft, erhöht dies die Reibung in der Außenverschraubung (5). Hierbei kann aufgrund des Gewindespiels auch ein gewisses Kippmoment hinzutreten. Dieses entsteht durch den Ausleger (25) und den gegenüber der Spindelachse (1) außermittigen Angriff der Stützlast. Der Reibungswiderstand in der Außenverschraubung (5) wird dann größer als der Reibungswiderstand in der Innenverschraubung (3). Dies hat zur Folge, daß die Außenverschraubung (5) stehen bleibt und die Innenverschraubung (3) in Bewegung kommt, wobei sich die innere Gewindespindel (2) in der äußeren Gewindespindel (4) dreht. Dies ist der sogenannte Langsamgang, bei dem die Mutter (6) nur noch eine langsame Linearbewegung (7) durchführt, wobei aber das auf die innere Gewindespindel (2) aufzubringende Drehmoment wegen des kleineren Durchmessers verhältnismäßig gering ist.

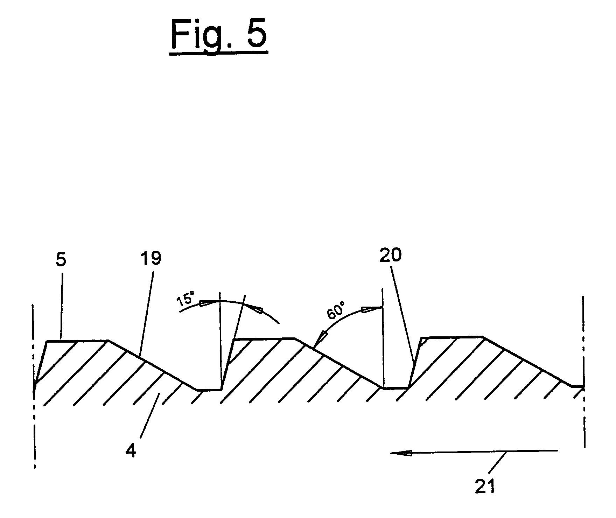

Der Spindeltrieb (22) besitzt eine Einrichtung zur Hemmung der Einfahrbewegung unter Last, die im Bereich der Außenverschraubung (5) angeordnet ist. Wie in Figur 5 dargestellt, besitzt die Außenverschraubung (5) an den unter der Stützlast und der Axialkraft (21) tragenden Gewindeflanken (19) einen abgeflachten Flankenwinkel. Figur 5 zeigt dies am Außengewinde der äußeren Gewindespindel (4), bei der die besagte Gewindeflanke (19) nach unten zum Abtriebselement (16) weist.

Durch die Flankenabflachung wird eine erhöhte Reibkraft erzeugt, die zu einer Art Selbsthemmung der Außenverschraubung (5) im Belastungsfall führt. Das von der erhöhten Reibkraft entwickelte Reib- oder Bremsmoment wirkt dem von der Stützlast bzw. Axialkraft (21) ausgeübten Antriebsmoment entgegen und verhindert ein selbsttätiges Einfahren des Spindeltriebs (22) unter Last.

Diese Gestaltung hat andererseits auch zur Folge, daß unter Belastung sehr schnell die Reibung in der Außenverschraubung (5) höher als in der Innenverschraubung (3) wird und der Wechsel vom Schnell- zum Langsamgang stattfindet. Hierfür ist im Gegensatz zum Stand der Technik auch kein Kippmoment in der Außenverschraubung (5) erforderlich. Vielmehr finden die Reibkrafterhöhung und der Gangwechsel auch bei Axialkräften (21) statt, die sehr nah an oder in der Spindelachse (1) einwirken.

Der für die quasi Selbsthemmung zu wählende Flankenwinkel hängt von der Gewindeauslegung, dem Reibbeiwert etc. ab. Im praktischen Ausführungsbeispiel liegt der Flankenwinkel zwischen der Gewindeflanke (19) und der quer zur Achse (21) verlaufenden Horizontalen bei einem Wert von mindestens 40°, vorzugsweise 60°.

Das Flankenprofil der Außenverschraubung (5) ist vorzugsweise unsymmetrisch, so daß die Winkelabflachung und Reibungserhöhung nur bei den unter Last aneinanderliegenden Gewindeflanken (19) vorhanden ist. Der Flankenwinkel an den rückwärtigen Gewindeflanken (20) kann entsprechend der gewählten Gewindeform steiler sein und beträgt beispielsweise ca. 15° gegen die Horizontale. Dadurch besteht beim belastungsfreien Auf- und Abdrehen des Abtriebselementes (16) im Schnellgang kein erhöhter Reibungswiderstand. Das Gewinde kann dafür in der ergonomisch günstigsten Form ausgebildet sein.

Abwandlungen der gezeigten Ausführungsbeispiele sind in verschiedener Weise möglich. Zum einen können die Verschraubungen (3,5) andere Gewindeformen besitzen. Ferner kann der Spindeltrieb (22) mehr als zwei ineinander greifende Gewindespindeln (2,4) aufweisen. Anstelle der Kurbel (15) kann ein anderes Antriebselement, z. B. auch ein Motor oder dergleichen zum Einsatz kommen. Anstelle des Stützrades (16) kann desgleichen das Abtriebselement einen Sützfuß oder dergleichen aufweisen. Dies ist z.B. für Stützen von Sattelaufliegern vorteilhaft.

Einer Abwandlung sind auch die verwendeten Werkstoffe und Reibungspaarungen zugänglich. Durch das Kupplungsglied (9) können sie in weiten Grenzen variiert werden, wobei die für den Schnellgang und die Gangumschaltung erforderlichen Reibungsunterschiede in der Innen- und Außenverschraubung (3,5) trotzdem erhalten bleiben. Gleiches gilt auch für die Abwandlungen der Steigungs- und Durchmesserunterschiede von Innen- und Außenverschraubung (3,5). Letztendlich müssen gewindebedingt keine Reibungsunterschiede in diesen Verschraubungen (3,5) bestehen, sie können allein durch das Kupplungsglied (9) geschaffen werden. Ferner ist es möglich, die Spindelzuordnung und die Steigungsunterschiede zu vertauschen.

Eine weitere Variation ist hinsichtlich der Einrichtung zur Hemmung der ungewollten Einfahrbewegung unter Last möglich. Eine erhöhte Reibung oder Selbsthemmung kann auch durch ein Feder- oder Spannelement geschaffen werden, das z.B. ähnlich wie das Kupplungsglied (9) wirkt. Außerdem kann durch veränderte Reibpaarungen auch auf normalem Weg eine Selbsthemmung in der Außenverschraubung (5) geschaffen werden.

### BEZUGSZEICHENSLISTE

- 1: Achse
- 2: innere Gewindespindel
- 3: Innenverschraubung
- 4: äußere Gewindespindel
- 5: Außenverschraubung
- 6: Mutter
- 7: Linearbewegung
- 8: Rotationsbewegung
- 9: Gewindebuchse (Kupplungsglied)
- 10: Nase
- 11: Aussparung, Schlitz
- 12: Druckfeder
- 13: Stirnende
- 14: Anschlag
- 15: Antriebselement, Kurbel
- 16: Abtriebselement, Stützrad
- 17: Rohr, innen
- 18: Rohr, außen
- 19: Gewindeflanke, steil
- 20: Gewindeflanke, flach
- 21: Axialkraft, Lastrichtung
- 22: Spindeltrieb, Stützanordnung
- 23: Lager
- 24: Beschlag
- 25: Ausleger

## Patentansprüche

1. Mehrstufiger Spindeltrieb zur Umsetzung einer Drehbewegung in eine Linearbewegung mit unterschiedlichen Ein- und Ausfahrgeschwindigkeiten, bestehend aus mindestens zwei teleskopisch ineinandergreifenden und in Schraubverbindung stehenden Gewindespindeln (2,4) mit unterschiedlicher Steigung, von denen eine Gewindespindel (2) mit einem Antriebselement (15) verbunden ist und eine andere Gewindespindel (4) über eine Mutter (6) mit einem Abtriebselement (16) zusammenwirkt, wobei die Gewindespindeln (2,4) und die Ein- und Ausfahrgeschwindigkeiten durch Reibkraft umschaltbar sind, dadurch **gekennzeichnet**, daß zwischen den Gewindespindeln (2,4) ein reibungserhöhendes Kupplungsglied (9) angeordnet ist.

2. Spindeltrieb nach Anspruch 1, dadurch **gekennzeichnet**, daß die innere Gewindespindel (2) in der äußeren hohlen Gewindespindel (4) über eine Innenverschraubung (3) mit einer Steigung geführt ist, die kleiner als die Steigung der zwischen der äußeren Gewindespindel (4) und der Mutter (6) befindlichen Außenverschraubung (5) ist.

3. Spindeltrieb nach Anspruch 1 oder 2, dadurch **gekennzeichnet**, daß das Kupplungsglied (9) als federbelastete Gewindebuchse (9) auf der inneren Gewindespindel (2) ausgebildet ist.

4. Spindeltrieb nach Anspruch 3, dadurch **gekennzeichnet**, daß die Gewindebuchse (9) mit einer Nase (10) in eine passende radiale Aussparung (11) der äußeren Gewindespindel (4) eingreift.

5. Spindeltrieb nach Anspruch 3 oder 4, dadurch **gekennzeichnet**, daß auf dem Umfang der Gewindebuchse (9) eine axial wirkende Druckfeder (12) geführt ist, die zwischen dem Stirnende (13) der äußeren Gewindespindel (4) und einem Anschlag (14) der Gewindebuchse (9) eingespannt ist.

6. Spindeltrieb nach Anspruch 4 oder 5, dadurch **gekennzeichnet**, daß die Wandung der rohrförmigen äußeren Gewindespindel (4) einen achsparallel sich erstreckenden Schlitz (11) aufweist, in den die radial nach außen ragende Nase (10) der Gewindebuchse (9) eingreift.

7. Spindeltrieb nach Anspruch 1 oder einem der folgenden, dadurch **gekennzeichnet**, daß die äußere Gewindespindel (4) eine Außenverschraubung (5) in der Größenordnung von Tr 30 x 16 P8 und eine Innenverschraubung (3) in der Größenordnung von Tr 16 x 4 aufweist.

8. Spindeltrieb nach Anspruch 1 oder einem der folgenden, dadurch **gekennzeichnet**, daß die innere Gewindespindel (2) und die Mutter (6) aus Metall, vorzugsweise Stahl, bestehen und die äußere Gewindespindel (4) aus einem reibungsarmen Kunststoff besteht.

9. Spindeltrieb nach Anspruch 1 oder einem der folgenden, dadurch **gekennzeichnet**, daß im Bereich der Außenverschraubung (5) eine Einrichtung zur Hemmung der Einfahrbewegung unter Last vorgesehen ist.

10. Spindeltrieb nach Anspruch 9, dadurch **gekennzeichnet**, daß die Außenverschraubung (5) in Lastrichtung ein reibungserhöhendes Flankenprofil aufweist.

11. Spindeltrieb nach Anspruch 10, dadurch **gekennzeichnet**, daß die bei Stützlast tragende Gewindeflanke (19) einen Flankenwinkel von mindestens 40°, vorzugsweise 60°, aufweist.

12. Spindeltrieb nach Anspruch 10 oder 11, dadurch **gekennzeichnet**, daß die Gewindeflanken (19,20) unterschiedliche Flankenwinkel aufweisen, wobei die bei Stützlast freie Gewindeflanke (20) steiler ist.

13. Spindeltrieb nach Anspruch 1 oder einem der folgenden, dadurch **gekennzeichnet**, daß das Antriebselement (15) als Kurbel und das Abtriebselement (16) als Stützfuß oder Stützrad ausgebildet sind.

14. Spindeltrieb nach Anspruch 1 oder einem der folgenden, dadurch **gekennzeichnet**, daß der Spindeltrieb (22) als verstellbare Stützanordnung eines Fahrzeugs oder Fahrzeuganhängers ausgebildet sind.

## Claims

1. Multispeed spindle drive for translating a rotary motion into a linear motion with different speeds of inward and outward travel, comprising at least two telescopically engaging and screw-connected threaded spindles (2, 4) of different pitch, of which one threaded spindle (2) is connected to a drive element (15) and another threaded spindle (4) interacts with a driven element (16) by way of a nut (6), the threaded spindles (2, 4) and the speeds of inward and outward travel being changeable by frictional force, characterised in that a friction-increasing coupling element (9) is arranged between the threaded spindles (2, 4).

2. Spindle drive according to claim 1, characterised in that the inner threaded spindle (2) is guided in the outer hollow threaded spindle (4) by an internal screw thread (3) with a pitch which is smaller than the pitch of the external screw thread (5) situated between the outer threaded spindle (4) and the nut (6).

3. Spindle drive according to claim 1 or 2, characterised in that the coupling element (9) is formed as a spring-loaded threaded bushing (9) on the inner threaded spindle (2).

4. Spindle drive according to claim 3, characterised in that the threaded bushing (9) with a nose (10) engages in a matching radial recess (11) of the outer threaded spindle (4)

5. Spindle drive according to claim 3 or 4, characterised in that an axially acting compression spring (12), which is held between the end face (13) of the outer threaded spindle (4) and a stop (14) of the threaded bushing (9), is guided on the circumference of the threaded bushing (9).

6. Spindle drive according to claim 4 or 5, characterised in that the wall of the tubular outer threaded spindle (4) has a slot (11) extending axially parallel, in which the nose (10) of the threaded bushing (9) extending radially outwards engages.

7. Spindle drive according to claim 1 or one of the succeeding claims, characterised in that the outer threaded spindle (4) has an external screw thread (5) in the order of magnitude Tr 30 x 16 P8 and an internal screw thread (3) in the order of magnitude Tr 16 x 4.

8. Spindle drive according to claim 1 or one of the succeeding claims, characterised in that the inner threaded spindle (2) and the nut (6) are composed of metal, preferably steel, and the outer threaded spindle (4) is composed of a low-friction plastic.

9. Spindle drive according to claim 1 or one of the succeeding claims, characterised in that a device for restricting the inward motion under load is provided in the area of the external screw thread (5).

10. Spindle drive according to claim 9, characterised in that the external screw thread (5) has a flank profile increasing friction in the direction of the load.

11. Spindle drive according to claim 10, characterised in that the support load-bearing thread flank (19) has a flank angle of at least 40°, preferably 60°.

12. Spindle drive according to claim 10 or 11, characterised in that the thread flanks (19, 20) have different flank angles, the thread flank (20) free of the support load being steeper.

13. Spindle drive according to claim 1 or one of the succeeding claims, characterised in that the drive element (15) is formed as a crank and the driven element (16) as support foot or support wheel.

14. Spindle drive according to claim 1 or one of the succeeding claims, characterised in that the spindle drive (22) is formed as adjustable support arrangement of a vehicle or vehicle trailer.

## Revendications

1. Commande d'arbre à plusieurs étages, destinée à la conversion d'un mouvement de rotation en un mouvement linéaire, avec des vitesses différentes de rentrée et de sortie, et consistant en au moins deux tiges filetées (2, 4), télescopiques, qui sont en liaison de vissage et qui ont un pas différent, l'une (2) des tiges filetées étant reliée à un élément d'entraînement (15) et une autre tige filetée (4) coopérant, par l'intermédiaire d'un écrou (6), avec un élément mené (16), les tiges filetées (2, 4) et les vitesses de rentrée et de sortie pouvant être commutées par une force de frottement, caractérisée par le fait qu'un organe d'accouplement (9), destiné à augmenter le frottement, est placé entre les tiges filetées (2, 4).

2. Commande d'arbre selon la revendication 1, caractérisée par le fait que la tige filetée intérieure (2) est guidée dans la tige filetée extérieure (4) creuse par l'intermédiaire d'un filetage de vissage intérieur (3) dont le pas est plus petit que le pas du filetage de vissage extérieur (5) existant entre la tige filetée extérieure (4) et l'écrou (6).

3. Commande d'arbre selon la revendication 1 ou 2, caractérisée par le fait que l'organe d'accouplement (9) est réalisé sous la forme d'une douille taraudée (9) commandée par ressort sur la tige filetée intérieure (2).

4. Commande d'arbre selon la revendication 3, caractérisée par le fait que la douille taraudée (9) pénètre, par un mentonnet (10), dans un évidement radial (11) correspondant situé dans la tige filetée extérieure (4).

5. Commande d'arbre selon la revendication 3 ou 4, caractérisée par le fait qu'un ressort de pression (12) agissant axialement est placé sur la circonférence de la douille taraudée (9), ce ressort étant encastré entre l'extrémité frontale (13) de la tige filetée extérieure (4) et une butée (14) de la douille taraudée (9).

6. Commande d'arbre selon la revendication 4 ou 5, caractérisée par le fait que la paroi de la tige filetée extérieure (4) de forme tubulaire présente une fente (11) qui s'étend de manière parallèle à l'axe, et dans laquelle pénètre le mentonnet (10), faisant radialement saillie vers l'extérieur, de la douille taraudée (9).

7. Commande d'arbre selon la revendication 1 ou l'une des revendications suivantes, caractérisée par le fait que la tige filetée extérieure (4) présente un filetage de vissage extérieur (5) de taille Tr 30 x 16 P8, et un filetage de vissage intérieur (3) de taille Tr 16 x 4.

8. Commande d'arbre selon la revendication 1 ou l'une des revendications suivantes, caractérisée par le fait que la tige filetée intérieure (2) et l'écrou (6) sont faits en métal, de préférence en acier, et que la tige filetée extérieure (4) consiste en une matière plastique à faible coefficient de friction.

9. Commande d'arbre selon la revendication 1 ou l'une des revendications suivantes, caractérisée par le fait qu'il est prévu, dans la zone du vissage extérieur (5), un dispositif servant à bloquer le mouvement de rentrée en charge.

10. Commande d'arbre selon la revendication 9, caractérisée par le fait que le filetage de vissage extérieur (5) présente, dans le sens de la charge, un profil de flanc augmentant le frottement.

11. Commande d'arbre selon la revendication 10, caractérisée par le fait que le flanc (19) travaillant du filetage lors d'une charge d'appui présente un angle de flanc d'au moins 40° et, de préférence, de 60°.

12. Commande d'arbre selon la revendication 10 ou 11, caractérisée par le fait que les flancs de filetage (19, 20) présentent des angles de flanc différents, le flanc (20) libre lors de la charge d'appui étant plus abrupt.

13. Commande d'arbre selon la revendication 1 ou l'une des revendications suivantes, caractérisée par le fait que l'élément d'entraînement (15) est réalisé sous la forme d'une manivelle et l'élément mené (16) sous la forme d'une béquille ou d'une roue de support.

14. Commande d'arbre selon la revendication 1 ou l'une des revendications suivantes, caractérisée par le fait que la commande d'arbre (22) est réalisée en tant qu'agencement réglable de soutien d'un véhicule ou d'une remorque de véhicule.
